(19) Europäisches Patentamt
European Patent Office
Office européen des brevets

(11) **EP 4 699 915 A1**

(12) **EUROPEAN PATENT APPLICATION**

(43) Date of publication:
**25.02.2026 Bulletin 2026/09**

(21) Application number: **25195990.4**

(22) Date of filing: **14.08.2025**

(51) International Patent Classification (IPC):
**B62J 1/00** *(2006.01)* **B62J 1/26** *(2006.01)*

(52) Cooperative Patent Classification (CPC):
**B62J 1/005; B33Y 80/00;** B62J 1/007; B62J 1/26

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.08.2024 CN 202411146828**

(71) Applicant: **Amplifi Tech (Xiamen) Limited**
**Xiamen Fujian (CN)**

(72) Inventors:
• **Li, Hsin Tzu**
**Taoyuan (CN)**
• **Lee, Tsung Han**
**Taoyuan (CN)**
• **Lin, Yu Chia**
**Taoyuan (CN)**
• **Yang, Yung Chun**
**Taoyuan (CN)**
• **Yang, Chuan Ching**
**Taoyuan (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **3D-PRINTED BICYCLE SADDLE**

(57) The present disclosure provides a 3D-printed bicycle saddle (100) including a shell (110) and an elastic pad (120) disposed on the shell (110), wherein the elastic pad (120) has a bottom surface (120b) facing the shell (110) and a top surface (120t) facing away from the bottom surface (120b). The elastic pad (120) features a 3D-printed lattice structure including a plurality of lattice struts (140), wherein the diameter of each lattice strut (140) gradually increases in a gradient manner from the top surface (120t) to the bottom surface (120b) of the elastic pad (120). The difference between the maximum diameter and the minimum diameter of each of the lattice struts (140) is smaller than or equal to 0.5 mm.

Fig. 3B

EP 4 699 915 A1

# EP 4 699 915 A1

## Description

[CROSS-REFERENCE TO RELATED APPLICATION]

This application claims priority to China Patent Application 202411146828.8, filed August 20, 2024, which is incorporated herein by reference.

[FIELD OF DISCLOSURE]

The present disclosure relates to bicycle saddles, particularly to a 3D-printed bicycle saddle.

[DESCRIPTION OF RELATED ART]

Three-dimensional (3D) printing, also known as additive manufacturing (AM), is a process that builds designated three-dimensional objects layer by layer from materials through automation. For example, a lattice structure is built layer by layer from materials to form the elastic portion of the bicycle saddle by controlling the lattice parameters. However, a lattice structure constructed layer by layer through the same lattice parameters can result in a uniform hardness. As a result, the bicycle saddle is unable to provide both a soft and elastic feel and sufficient support to withstand sudden downward compression forces (compression stress).

[SUMMARY]

The embodiments of the present disclosure provide a 3D-printed bicycle saddle comprising an elastic pad having lattice struts, wherein the dimensions of the lattice struts vary in a gradient manner, to enhance the comfort and supporting capabilities of the bicycle saddle.

According to several embodiments of the present disclosure, a 3D-printed bicycle saddle comprises a shell and an elastic pad disposed on the shell, wherein the elastic pad has a bottom surface facing the shell and a top surface facing away from the bottom surface. The elastic pad has a 3D-printed lattice structure comprising multiple lattice struts. A diameter of each lattice strut increases gradually in a gradient manner from the top surface to the bottom surface of the elastic pad, and a difference between a maximum diameter and a minimum diameter of each lattice strut is less than or equal to 0.5 mm.

In one or several embodiments of the present disclosure, the 3D-printed lattice structure comprises a sit bone section, a nose section, and a middle section located between the nose section and the sit bone section, wherein a lattice density of the sit bone section is larger than a lattice density of the middle section and a lattice density of the nose section.

In one or several embodiments of the present disclosure, the lattice density of the middle section is smaller than the lattice density of the nose section.

In one or several embodiments of the present disclosure, each of the sit bone section, the middle section, and the nose section has a lattice unit cell, wherein the lattice unit cell of the sit bone section is different from the lattice unit cell of the middle section and the lattice unit cell of the nose section.

In one or several embodiments of the present disclosure, each of the sit bone section, the middle section, and the nose section has a lattice unit cell, wherein the lattice unit cell is identical among the sit bone section, the middle section, and the nose section.

In one or several embodiments of the present disclosure, the maximum diameter of each lattice strut of the sit bone section is larger than or equal to the maximum diameter of each lattice strut of the middle section and the maximum diameter of each lattice strut of the nose section.

In one or several embodiments of the present disclosure, the lattice struts of the sit bone section, the middle section, and the nose section are interconnected with one another.

In one or several embodiments of the present disclosure, the minimum diameter of each lattice strut is larger than or equal to 0.8 mm.

In one or several embodiments of the present disclosure, a thickness of the elastic pad from the bottom surface to the top surface is larger than or equal to 1 cm.

In one or more embodiments of the present disclosure, the lattice unit cell of the 3D-printed lattice structure is selected from a group consisting of body-centered cubic cells, face-centered cubic cells, fluorite cells, octet cells, Voronoi cells, gyroid cells, and combinations thereof.

According to the aforementioned embodiments, the 3D-printed bicycle saddle of the present disclosure comprises an elastic pad having a 3D-printed lattice structure, wherein the diameter of the lattice struts of the 3D-printed lattice structure gradually increases in a gradient manner from the top surface to the bottom surface of the elastic pad, and a difference between the maximum diameter and the minimum diameter of each of the lattice struts is smaller than or equal to 0.5 mm. Therefore, the elastic pad features both soft haptics and high elasticity in the vertical direction, thereby enhancing the comfort and supporting capabilities of the 3D-printed bicycle saddle.

[BRIEF DESCRIPTION OF THE DRAWINGS]

To better understand the objectives, novel features, advantages, and embodiments of the present disclosure, relevant diagrams are provided along with the descriptions that follow. Please note that, according to industrial standard forms of description, the dimensions of every component in the diagrams are not drawn to scale. For explanatory purposes, the features, sizes, ratios, and configurations of components may be enlarged or reduced in scale for clarity.

Fig. 1 is a three-dimensional schematic diagram of a 3D-printed bicycle saddle according to several embodiments of the present disclosure.
Fig. 2 is a cross-sectional schematic diagram of an elastic pad according to several embodiments of the present disclosure.
Fig. 3A is a cross-sectional schematic diagram of the elastic pad taken along line A-A' in Fig. 2 according to several embodiments of the present disclosure.
Fig. 3B is an enlarged schematic diagram of the elastic pad in Fig. 3A according to several embodiments of the present disclosure.
Figs. 4A to 4F are schematic diagrams of lattice unit cells for different 3D-printed lattice structures according to several embodiments of the present disclosure.
Fig. 5 is an experimental result graph of 3D-printed bicycle saddles according to several embodiments of the present disclosure.
Fig. 6 is an experimental result graph of 3D-printed bicycle saddles according to several embodiments of the present disclosure.

[DETAILED DESCRIPTION]

To address different features of the object, several embodiments and examples are provided in the present disclosure. The following examples practically describe the components and configurations of the present disclosure in a simplified manner. These are for clear illustration and shall not be interpreted as limiting the scope, applicability, or configuration of the present disclosure in any way. In the description of features of a component, for example, "a first feature formed above or on a second feature" may include embodiments having the first feature and the second feature configured in direct contact with each other and embodiments having an additional feature configured in between the first feature and the second feature, so that the first feature and the second feature are not directly in contact. Furthermore, the numbers and/or symbols and letters can be duplicated in the embodiments and examples of the present disclosure. Such duplication is for simplicity and clarification, without necessarily implying a relationship among the presented embodiments and/or configurations.

Furthermore, opposite and relative terms, such as "underneath," "under," "lower," "on," and "upper," are used in this specification to describe the relations of a component (or feature) with another component (or another feature) in the figure. In addition to the orientations illustrated in the figures, the purpose of opposite/relative terms is to cover components of different orientations in use or during operations. Orientations of devices can be defined in terms of other expressions (rotating 90 degrees or in other directions), as well as relative expressions/symbols in describing the spatial orientation/position for component operation.

The present disclosure provides a 3D-printed bicycle saddle comprising a shell and an elastic pad disposed on the shell. The elastic pad has a 3D-printed lattice structure comprising a plurality of lattice struts, wherein the diameter of each lattice strut gradually increases in a gradient manner from the top surface to the bottom surface of the elastic pad. A difference between the maximum diameter and the minimum diameter of each of the lattice struts is smaller than or equal to 0.5 mm so that the elastic pad has both soft haptics and high elasticity in the vertical direction from the top surface to the bottom surface, thus improving comfort and the supporting capability of the 3D-printed bicycle saddle.

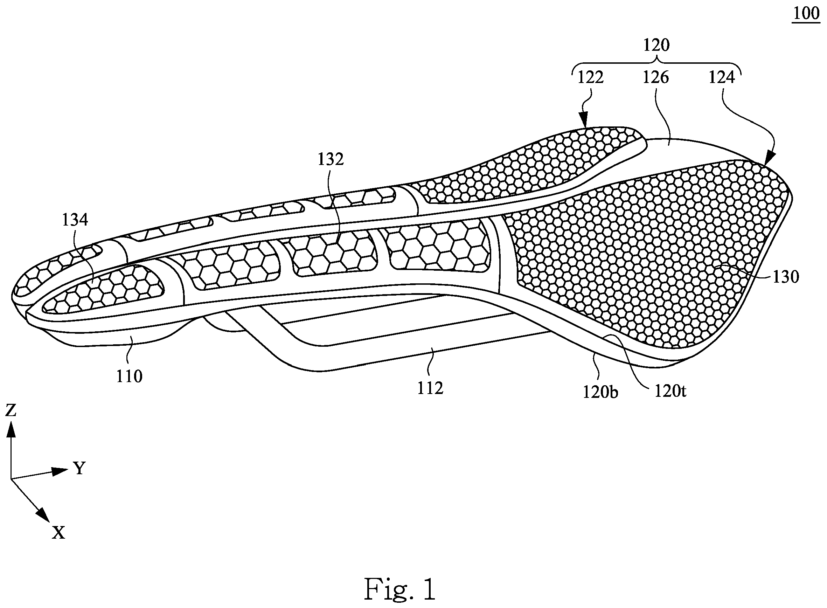

Fig. 1 is a three-dimensional schematic diagram of a 3D-printed bicycle saddle 100 according to several embodiments of the present disclosure. The 3D-printed bicycle saddle 100 comprises a shell 110 and an elastic pad 120. The shell 110 is made of relatively hard materials, for example, metal or carbon fiber, to serve as the main supporting structure of the 3D-printed bicycle saddle 100. The elastic pad 120, disposed on the shell 110, is made of elastic materials, such as thermoplastic rubber or thermoplastic polyurethane, to achieve the effect of reducing vibration and enhancing comfort during bicycle riding. The elastic pad 120 comprises a bottom surface 120b facing the shell 110 and a top surface 120t facing away from the bottom surface 120b, wherein the bottom surface 120b is adhered to the shell 110 with an adhesive or mounted to the shell 110 with screws. In one or several embodiments, the shell 110 comprises a pair of rails 112, disposed on the side facing away from the elastic pad 120, to secure the 3D-printed bicycle saddle 100 to the bicycle seatpost.

The elastic pad 120 is manufactured as a one-piece structure using three-dimensional (3D) printing, comprising a right half pad 122, a left half pad 124, and a connecting portion 126 located between the right half pad 122 and the left half pad 124. The right half pad 122 and the left half pad 124 have a 3D-printed lattice structure, respectively, thereby improving the elasticity and supporting capability of the elastic pad 120. The connecting portion 126 is physically connected to the right half pad 122 and the left half pad 124, resulting in an elastic pad 120 with a symmetrical structure with respect to the Y-axis direction, which serves as a symmetry axis. In one or several embodiments, each of the top surfaces of the right half pad 122 and the left half pad 124 is higher than the top surface of the connecting portion 126 so that the connecting portion 126 appears as a recessed area relative to the top surface 120t of the elastic pad 120. Therefore, the right half pad 122 and the left half pad 124 become the main areas to bear the weight of the rider.

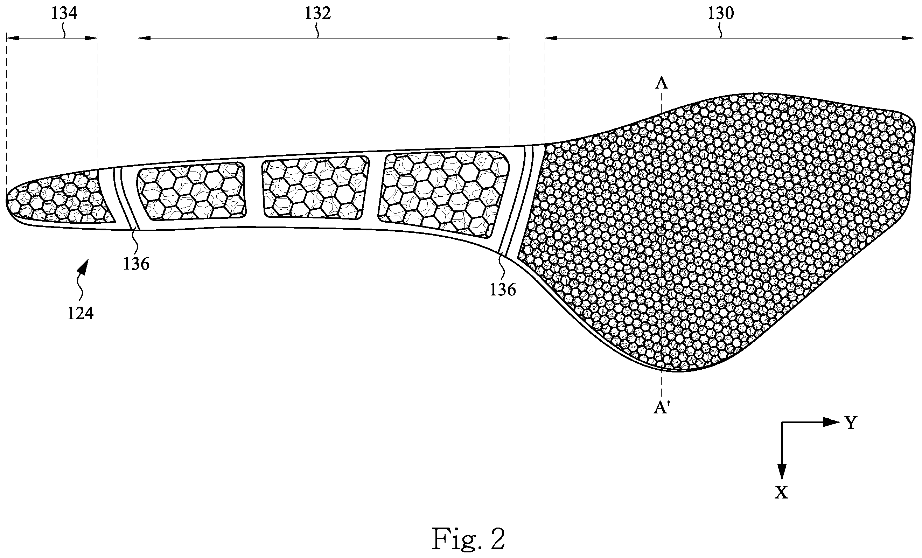

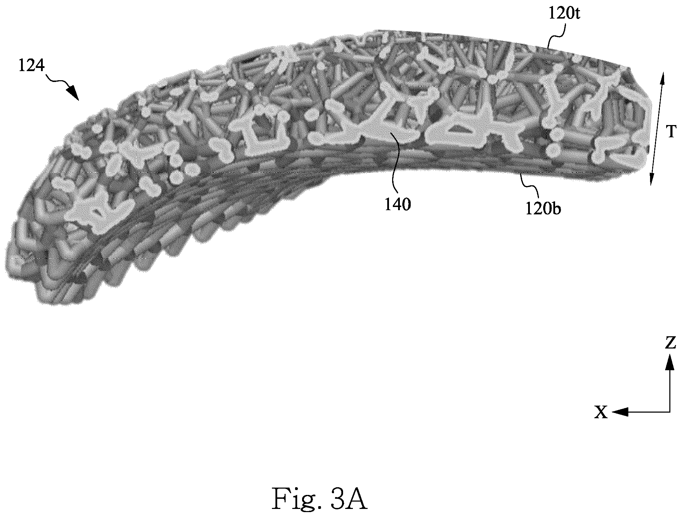

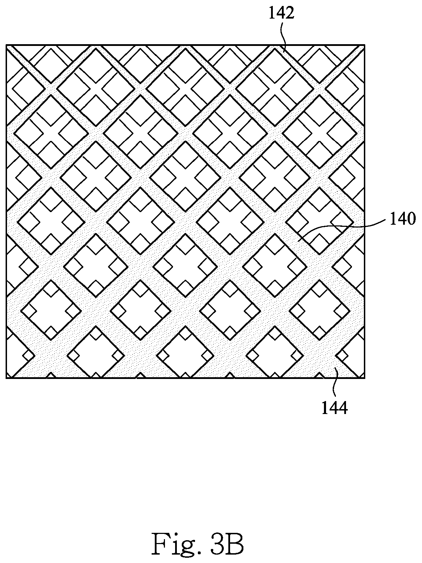

To better explain the 3D-printed lattice structure of the elastic pad 120, please refer to Fig. 2, Fig. 3A, and Fig. 3B. Fig. 2 is a cross-sectional schematic diagram of an elastic pad according to several embodiments of the present disclosure, Fig. 3A is a cross-sectional schematic diagram of the elastic pad taken along line A-A' in Fig. 2 according to several embodiments of the present disclosure, and Fig. 3B is an enlarged schematic diagram of the elastic pad in Fig. 3A according to several embodiments of the present disclosure. Although Fig. 2 to Fig. 3B are schematic diagrams of the left half pad 124 that serve as an example representing the elastic pad 120, the descriptions associated with Fig. 2 to Fig. 3B can also apply to the right half pad 122 in order to fully explain that the elastic pad 120 has a symmetrical 3D-printed lattice structure.

Please refer to Fig. 2. The 3D-printed lattice structure of the left half pad 124 comprises a sit bone section 130, a middle section 132, and a nose section 134 that are arranged laterally along the Y-axis direction, wherein the middle section 132 is located in between the sit bone section 130 and the nose section 134. The 3D-printed lattice structures of the sit bone section 130, the middle section 132, and the nose section 134 are arranged in different manners, resulting in these three sections having different lattice densities. More specifically, the sit bone section 130 has a lattice density larger than the lattice density of the middle section 132 and larger than the lattice density of the nose section 134, so the sit bone section 130 has high elasticity and a high supporting capability in order to serve as the one section among three sections that bears most of the weight of the rider. Smaller lattice densities in the middle section 132 and the nose section 134 can increase the softness of the front portion of the left half pad 124, thus enhancing comfortable haptics while biking.

In one or several embodiments of the present disclosure, the lattice density of the middle section 132 is smaller than the lattice density of the nose section 134, so that the middle section 132 is the softest section among these three sections and can reduce pressure exerted on the rider. In one or more embodiments, the left half pad 124 further comprises a connecting portion 136 that physically connects the sit bone section 130 and the middle section 132, as well as the middle section 132 and the nose section 134, thereby connecting these three sections with different lattice densities.

Please refer to Fig. 3A and Fig. 3B. The 3D-printed lattice structure of the left half pad 124 comprises a plurality of lattice struts 140, wherein lattice struts 140 are mutually connected with each other and form a plurality of lattice unit cells. The diameter of each of the lattice struts 140 gradually increases from the top surface (that is, the top surface 120t of the elastic pad 120) to the bottom surface (that is, the bottom surface 120b of the elastic pad 120) of the left half pad 124, so that the diameter of the strut end 142 near the top surface 120t is smaller than the diameter of the strut end 144 near the bottom surface 120b. Please note that the 3D-printed lattice structure is formed by 3D printing technology. Therefore, the diameter of the lattice strut 140 can vary in a gradient manner. In other words, the diameter of the lattice strut 140 changes gradually and linearly without significant staircase-like variations.

More specifically, in the extending direction of the lattice strut 140 from the top surface 120t to the bottom surface 120b, the lattice struts 140 closest to the top surface 120t have the minimum diameter, whereas the lattice struts 140 closest to the bottom surface 120b have the maximum diameter. The difference between the maximum diameter and the minimum diameter is smaller than or equal to 0.5 mm. Through this configuration, the 3D-printed lattice structure is relatively soft in the upper portion and gradually becomes stiffer in the lower portion. Therefore, the left half pad 124 can provide both soft haptics and high elasticity along the vertical direction from the top surface 120t to the bottom surface 120b. Upon sudden downward forces, the left half pad 124 will not contact the shell located below (for example, the shell 110 in Fig. 1), thereby increasing comfort and the supporting capability of the 3D-printed bicycle saddle. Furthermore, the difference between the diameters of the lattice strut 140 can enhance the vibration absorption effect of the 3D-printed lattice structure. Such a design can reduce the quantity of elastic materials used in production and produce a lightweight product. If the difference between the maximum diameter and the minimum diameter of each lattice strut exceeds 0.5 mm, a hardness difference between the upper portion and the lower portion of the 3D-printed lattice structure may be too large, resulting in uncomfortable haptics.

Although Figs. 3A and 3B are cross-sectional schematic diagrams of the sit bone section 130 as exemplary representations of the 3D-printed lattice structure, the descriptions referring to Figs. 3A and 3B can also be applied to the middle section 132 and the nose section 134. In other words, each of the middle section 132 and the nose section 134 also comprise a plurality of lattice struts 140 that are mutually connected, and the diameters of the lattice struts 140 change in a gradient manner, wherein the difference between the maximum diameter and the minimum diameter of each of the lattice struts 140 is smaller than or equal to 0.5 mm.

In one or several embodiments of the present disclosure, the difference between the maximum diameter and the minimum diameter of the lattice struts 140 of the sit bone section 130, the difference between the maximum diameter and the minimum diameter of the lattice struts 140 of the middle section 132, and the difference between the maximum diameter and the minimum diameter of the lattice struts 140 of the nose section 134 are the same. For example, a difference between the maximum diameter and the minimum diameter of the lattice struts 140 of each of these three sections is equal to 0.5 mm. In such embodiments, the maximum diameter of each of the sit bone section 130, the middle section 132, and the nose section 134 can be different, and the minimum diameter of each of the sit bone section 130, the middle section 132, and the nose section 134 can be different, providing the maximum diameter of the lattice struts 140 of the sit bone section 130 to be larger than the maximum diameter of the lattice struts 140 of the middle section 132 and the maximum diameter of the lattice struts 140 of the nose section 134. For example, the maximum diameter and the minimum diameter of the lattice struts 140 of the sit bone section 130 are 1.6 mm and 1.1 mm, respectively, and the maximum diameter and the minimum diameter of the lattice struts 140 of the nose section 134 are 1.3 mm and 0.8 mm, respectively. In several other embodiments, the maximum diameter of the lattice struts 140 of the sit bone section 130 is equal to the maximum diameter of the lattice struts 140 of the middle section 132 and/or the maximum diameter of the lattice struts 140 of the nose section 134.

In one or several other embodiments of the present disclosure, the minimum diameter of the lattice struts 140 is larger than or equal to 0.8 mm, for example, 0.8 mm, 1.0 mm, 1.2 mm, 1.4 mm, 1.6 mm, 1.8 mm, or 2.0 mm, thereby reducing the risk of the upper portion of the 3D-printed lattice structure being overly soft and prone to collapse under pressure. In one or more other embodiments, the thickness T of the elastic pad 120 from the bottom surface 120b to the top surface 120t is greater than or equal to 1 cm, thereby enhancing the comfort and supporting capability provided by the lattice struts 140 due to the diameter gradient variation. For example, the thickness T is between 1 cm and 30 cm, 1 cm and 20 cm, or 1 cm and 10 cm. In such embodiments, the thickness T of the sit bone section 130 is larger than the thicknesses T of the middle section 132 and the nose section 134, respectively, in order to enhance comfort and the supporting capability of the sit bone section 130 as the main area to bear the weight of the rider.

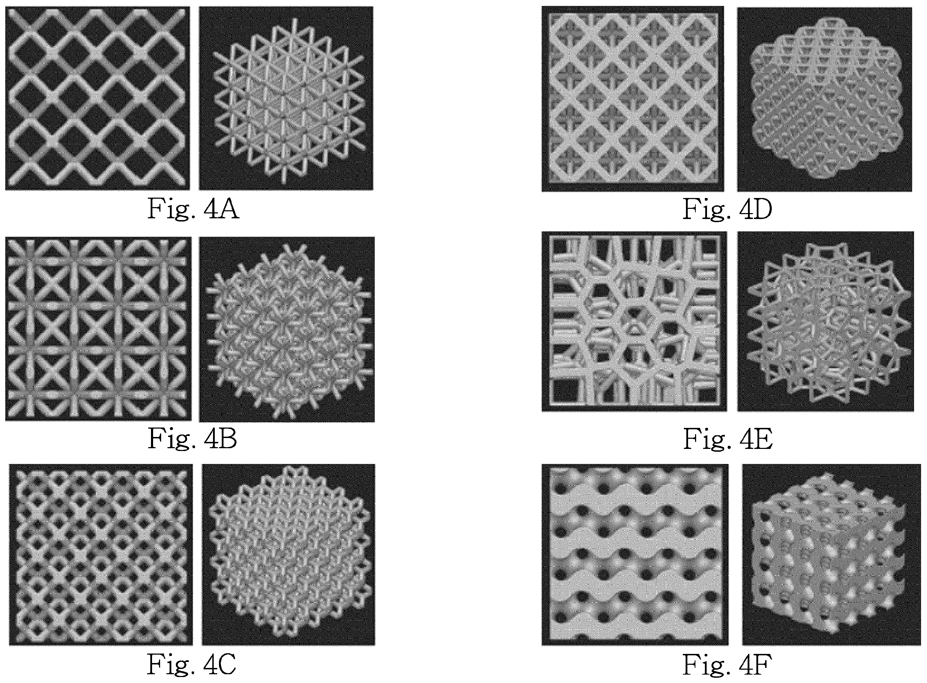

The lattice struts 140 of the sit bone section 130, the middle section 132, and the nose section 134 are interconnected with one another, such that a lattice structure with lattice unit cells are formed in each of these three sections, thus increasing the strength of the 3D-printed lattice structure. The selected lattice unit cells of the 3D-printed lattice structure can provide high elasticity within a confined space, thereby increasing the supporting capability of the 3D-printed lattice structure. According to several embodiments of the present disclosure, Figs. 4A to 4F are schematic diagrams of the lattice unit cells of different 3D-printed lattice structures according to several embodiments of the present disclosure, wherein the lattice unit cell is selected from the group consisting of body-centered cubic cells in Fig. 4A, face-centered cubic cells in Fig. 4B, fluorite cells in Fig. 4C, octet cells in Fig. 4D, Voronoi cells in Fig. 4E, gyroid cells in Fig. 4F, and combinations thereof.

Each of the sit bone section 130, the middle section 132, and the nose section 134 has lattice unit cells, and the lattice unit cells of these three sections can be the same or different. In one or more embodiments of the present disclosure, the sit bone section 130, the middle section 132, and the nose section 134 share the same lattice unit cell. For example, all three sections have a lattice structure composed of body-centered cubic cells. In one or several embodiments of the present disclosure, the lattice unit cells of the sit bone section 130 are different from the lattice unit cells of the middle section 132 and the nose section 134. For example, the sit bone section 130 has a lattice structure composed of Voronoi cells, while each of the middle section 132 and the nose section 134 has lattice structures composed of body-centered cubic cells. In several other embodiments, the sit bone section 130, the middle section 132, and the nose section 134 have lattice unit cells, respectively, that differ from one another.

In the following descriptions, various measurements and evaluations of the 3D-printed bicycle saddle of the present disclosure will be disclosed. More specific details on the features and effects of the present disclosure will be provided in reference to Experimental Example 1 and Experimental Example 2.

<Experimental Example 1 : Diameter of the lattice strut of the 3D-printed lattice structure>

In this Experiment Example, evaluations were conducted to focus on the impact of the lattice strut diameter on comfort and the supporting capability of the 3D-printed lattice structure. More specifically, the 3D-printed lattice structures were produced using the same elastic materials for every embodiment, wherein each embodiment features a cube with a side length of 3 cm, and the lattice unit cell of each embodiment is a body-centered cubic cell. Values of the diameter parameter of the lattice strut of every embodiment are listed in Table 1, wherein when values of the minimum diameter and the maximum diameter, respectively, are the same, it represents that the lattice strut maintains a constant diameter. When values of the minimum diameter and the maximum diameter are different, it represents that the diameter of the lattice strut changes from the minimum diameter to the maximum diameter in a gradient manner.

Table 1

|  | Minimum diameter (mm) | Maximum diameter (mm) |
|---|---|---|
| Embodiment 1 | 0.8 | 0.8 |
| Embodiment 2 | 0.8 | 1.0 |
| Embodiment 3 | 0.8 | 1.3 |
| Embodiment 4 | 0.8 | 1.6 |
| Embodiment 5 | 1.0 | 1.0 |
| Embodiment 6 | 1.3 | 1.3 |
| Embodiment 7 | 1.6 | 1.6 |

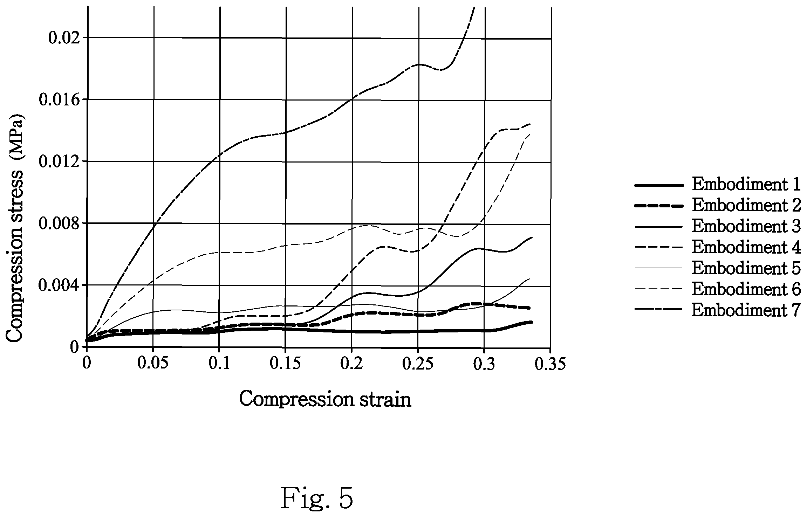

Next, a material testing machine equipped with a force sensor capable of measuring up to 1 kilonewton (kN) was used to conduct uniaxial compression tests in every embodiment. More specifically, each embodiment was compressed by a compression cylinder/platen of the material testing machine at a strain rate of 5 mm/min, and the compression was stopped when the compression displacement reached 33% of the original height (i.e., 3 cm) of each embodiment. The force sensor measured the compression force corresponding to a compression displacement during the compression process of every embodiment. Based on the measurement results and the following Equations (I) and (II), the corresponding compression stress and compression strain can be calculated, and compression stress-compression strain curves were plotted for every embodiment. The results of the plotted curves are shown in Fig. 5.

$$\text{Compression Stress } (\sigma) = \text{Compression Force}(F)/\text{Cross-sectional Area of the Sample under the Force}(A)$$

$\dots$ **Equation (I)**

$$\text{Compression Strain } (\varepsilon) = \text{Compression Displacement } (\Delta h)/\text{Original Height of the Sample}(h_0)$$

$\dots$ **Equation (II)**

According to Fig. 5, three stages are observed in the curved lines of all embodiments, including a nearly linear elastic stage, a flat plateau stage with an approximately flat slope, and a densification stage characterized by a rapid increase. The curves of Embodiment 2 and Embodiment 3 generally exhibit an elastic behavior, indicating that the compression stress increases steadily with the increase in compression strain. Based on this information, if the diameter of the lattice strut changes in a gradient manner and the difference between the maximum diameter and the minimum diameter is smaller than or equal to 0.5 mm, the 3D-printed lattice structure can provide corresponding support during compressive deformation, thereby exhibiting a cushioning effect and enhancing comfort. Compared with Embodiment 2, Embodiment 3 can provide greater supporting force under the same level of compression strain and, therefore, thereby result in a higher compression stress.

Although the curve of Embodiment 4 exhibits an elastic behavior under a compression strain smaller than 0.2, the curve quickly enters the densification stage when the compression strain exceeds 0.2. This means that after the compression strain exceeds the critical value, even a slight increase in compression displacement results in a sharp rise in compression force. Therefore, if the difference between the maximum diameter and the minimum diameter of the lattice struts is larger than 0.5 mm, the upper portion of the 3D-printed lattice structure may easily collapse, causing the lower portion of the 3D-printed lattice structure with high stiffness to bear the weight and stress directly, causing an uncomfortable haptic feeling to riders.

Curves of Embodiment 1 and Embodiment 5 generally exhibit a plateau behavior, with relatively low corresponding compression stress. This indicates that the structures can withstand only a small compression force, and that a slight increase in compression force can trigger a significant increase in compression displacement. Therefore, if the diameter of the lattice struts remains consistent and is smaller than or equal to 1 mm, the supporting capability of the 3D-printed lattice structure becomes low and is prone to collapse easily.

Curves of Embodiment 6 and Embodiment 7 exhibit an elastic behavior with relatively high compression stress at low compression strain, and transition into a densification behavior at higher compression strain, indicating that a large stress is needed to generate a specified compression displacement. Therefore, if the diameter of the lattice struts remains consistent and is larger than 1 mm, the stiffness of the 3D-printed lattice structure becomes high, which can easily cause an uncomfortable haptic feeling to riders.

< Experimental Example 2 : Lattice density of the 3D-printed bicycle saddle>

In Experiment Example 2, evaluations were conducted to examine the impact of lattice density on the comfort and supporting capability of different functional sections of the 3D-printed bicycle saddle. More specifically, an elastic pad of the 3D-printed bicycle saddle was produced using the diameter parameters of the lattice struts of Embodiment 3 in Experimental Example 1, wherein the elastic pad comprises a sit bone section with a lattice density of 22.04 nodes/cm$^3$, a middle section with a lattice density of 18.55 nodes/cm$^3$, and a nose section with a lattice density of 21.62 nodes/cm$^3$. The unit cell of these three sections of the elastic pad is a body-centered cubic cell.

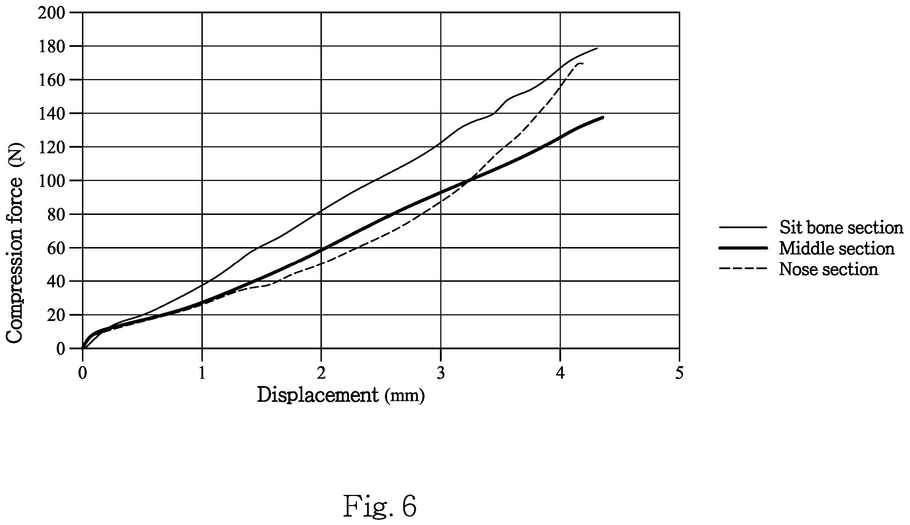

Next, the elastic pad was placed on a fixing mold modeled after the shell and subjected to uniaxial compression test using a material testing machine equipped with a force sensor capable of measuring up to 1 kilonewton (kN). More specifically, the compression cylinder of the material testing machine applied compressed the sit bone section, the middle section, and the nose section at a strain rate of 150 mm/min, and compression was stopped when the compression displacement reached 4.4 mm. The force sensor measured the compression force corresponding to the compression displacement in three different sections during the compression process. Based on the measurement results, the compression force-displacement curves were plotted for three different sections, as shown in Fig. 6. Uniaxial compression tests were repeated to obtain multiple measurement results at a compression displacement of 4 mm. Elasticity test results were calculated, as listed in Table 2.

Table 2

|  | Nose Section | Middle Section | Sit Bone Section |
|---|---|---|---|
| Average Compression Force (N) | 116.5 | 107.6 | 158.4 |
| Standard Deviation of Compression Force | 9.5 | 7.7 | 14.1 |
| 3 Times Standard Deviation of Compression Force | 28.5 | 23.1 | 42.3 |

According to Fig. 6 and Table 2, compression force in the sit bone section, the middle section, and the nose section respectively increases as the compression displacement increases,\; and when the compression displacement is 4 mm, the compression force in the sit bone section is larger than the compression force in the middle section and the nose section, respectively. Therefore, the sit bone section with a larger lattice density has correspondingly larger elasticity, which further enhances the supporting capability of the sit bone section. The middle section and the nose section, with a smaller lattice density, respectively, exhibit lower elasticity, providing a soft sensing and haptic experience.

According to the aforementioned embodiments, the 3D-printed bicycle saddle of the present disclosure comprises a shell and an elastic pad disposed on the shell. The elastic pad has a 3D-printed lattice structure comprising a plurality of lattice struts, wherein the diameter of each lattice strut gradually increases in a gradient manner along the vertical direction from the top surface to the bottom surface of the elastic pad. The difference between the maximum diameter and the minimum diameter of each of the lattice struts is smaller than or equal to 0.5 mm. Therefore, the elastic pad features both soft haptics and high elasticity, thereby enhancing the comfort and support capabilities of the 3D-printed bicycle saddle. The elastic pad can be divided into a sit bone section, a middle section, and a nose section in the lateral direction, based on its function. These three sections, with varying lattice densities, can further enhance comfort and support corresponding to each functional area.

Features of the above-preferred embodiments are presented to help those skilled in the art better understand the objectives, novel features, and advantages of the present disclosure. Those skilled in the art may use any alternative embodiments, processes, or designs that are modified or changed without departing from the spirit and scope of the present disclosure and shall be included in the appended claims.

[COMPONENT SYMBOL]

100: 3D-printed bicycle saddle
110: Shell
112: Rail
120: Elastic pad
120b: Bottom surface
120t: Top surface

122: Right half pad
124: Left half pad
126: Connecting portion
130: Sit bone section
132: Middle section
134: Nose section
136: Connecting portion
140: Lattice strut
142, 144: Strut end
A-A': Line A-A'
T: Thickness
X, Y, Z: Axis

**Claims**

1. A three-dimensional printed (3D-printed) bicycle saddle comprising:

   a shell; and
   an elastic pad disposed on the shell, wherein the elastic pad comprises a bottom surface facing the shell and a top surface facing away from the bottom surface,
   wherein the elastic pad has a 3D-printed lattice structure, the 3D-printed lattice structure comprises a plurality of lattice struts, a diameter of each of the lattice struts gradually increases in a gradient manner from the top surface to the bottom surface of the elastic pad, and a difference between a maximum diameter and a minimum diameter of the diameter of each of the lattice struts is smaller than or equal to 0.5 mm.

2. The 3D-printed bicycle saddle of Claim 1, wherein the 3D-printed lattice structure comprises:

   a sit bone section;
   a nose section; and
   a middle section located between the nose section and the sit bone section, wherein a lattice density of the sit bone section is larger than a lattice density of the middle section and a lattice density of the nose section.

3. The 3D-printed bicycle saddle of Claim 2, wherein the lattice density of the middle section is smaller than the lattice density of the nose section.

4. The 3D-printed bicycle saddle of Claim 2, wherein each of the sit bone section, the middle section, and the nose section has a lattice unit cell, and the lattice unit cell of the sit bone section is different from the lattice unit cell of the middle section and the lattice unit cell of the nose section.

5. The 3D-printed bicycle saddle of Claim 2, wherein each of the sit bone section, the middle section, and the nose section has a lattice unit cell, and the lattice unit cell is identical among the sit bone section, the middle section, and the nose section.

6. The 3D-printed bicycle saddle of Claim 2, wherein the maximum diameter of each of the lattice struts of the sit bone section is larger than or equal to the maximum diameter of each of the lattice struts of the middle section and the maximum diameter of each of the lattice struts of the nose section.

7. The 3D-printed bicycle saddle of Claim 2, wherein the lattice struts of the sit bone section, the middle section, and the nose section are interconnected with one another.

8. The 3D-printed bicycle saddle of Claim 1, wherein the minimum diameter of each of the lattice struts is larger than or equal to 0.8 mm.

9. The 3D-printed bicycle saddle of Claim 1, wherein a thickness of the elastic pad from the bottom surface to the top surface is larger than or equal to 1 cm.

10. The 3D-printed bicycle saddle of Claim 1, wherein a lattice unit cell of the 3D-printed lattice structure is selected from a group consisting of body-centered cubic cells, face-centered cubic cells, fluorite cells, octet cells, Voronoi cells, gyroid cells, and combinations thereof.

Fig. 1

EP 4 699 915 A1

Fig. 2

Fig. 3A

EP 4 699 915 A1

Fig. 3B

Fig. 4D

Fig. 4E

Fig. 4F

Fig. 4A

Fig. 4B

Fig. 4C

Fig. 5

Fig. 6

Europäisches
Patentamt
European
Patent Office
Office européen
des brevets

# EUROPEAN SEARCH REPORT

**Application Number**

EP 25 19 5990

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 882 115 A1 (TREK BICYCLE CORP [US]) 22 September 2021 (2021-09-22) * paragraphs [0043], [0044]; claims 1,8; figures 1-11 * | 1-10 | INV.<br>B62J1/00<br><br>ADD.<br>B62J1/26 |
| A | CN 117 906 417 A (UNIV DALIAN TECH) 19 April 2024 (2024-04-19) * figure 8 * | 1 | |
| A | WO 2024/099488 A1 (POSEDLA S R O [CZ]) 16 May 2024 (2024-05-16) * figures 1-12 * | 1 | |
| A | US 2024/140035 A1 (BIGOLIN BARBARA [IT] ET AL) 2 May 2024 (2024-05-02) * figures 1-4,9-14 * | 1 | |

**TECHNICAL FIELDS SEARCHED (IPC)**

B62J

The present search report has been drawn up for all claims

| Place of search | Date of completion of the search | Examiner |
|---|---|---|
| The Hague | 12 December 2025 | Molina Encabo, Aitor |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
............................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 19 5990

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2025

| Patent document cited in search report | | | Publication date | Patent family member(s) | | Publication date |
|---|---|---|---|---|---|---|
| EP 3882115 | A1 | | 22-09-2021 | EP | 3882115 A1 | 22-09-2021 |
| | | | | US | 2021294936 A1 | 23-09-2021 |
| CN 117906417 | A | | 19-04-2024 | NONE | | |
| WO 2024099488 | A1 | | 16-05-2024 | CZ | 309784 B6 | 04-10-2023 |
| | | | | WO | 2024099488 A1 | 16-05-2024 |
| US 2024140035 | A1 | | 02-05-2024 | AU | 2022230060 A1 | 12-10-2023 |
| | | | | BR | 112023017598 A2 | 05-12-2023 |
| | | | | CA | 3212488 A1 | 09-09-2022 |
| | | | | CN | 117177905 A | 05-12-2023 |
| | | | | EP | 4301652 A2 | 10-01-2024 |
| | | | | JP | 2024512321 A | 19-03-2024 |
| | | | | KR | 20230153444 A | 06-11-2023 |
| | | | | TW | 202248034 A | 16-12-2022 |
| | | | | US | 2024140035 A1 | 02-05-2024 |
| | | | | WO | 2022185262 A2 | 09-09-2022 |

EPO FORM P0459

For more details about this annex : see Official Journal of the European Patent Office, No. 12/82

**REFERENCES CITED IN THE DESCRIPTION**

**Patent documents cited in the description**

- CN 202411146828